Europäisches Patentamt

European Patent Office

Office européen des brevets

(19)

(11) Veröffentlichungsnummer: **0 137 953**
**B1**

(12) **EUROPÄISCHE PATENTSCHRIFT**

(45) Veröffentlichungstag der Patentschrift: **20.06.90**

(21) Anmeldenummer: **84109656.3**

(22) Anmeldetag: **14.08.84**

(51) Int. Cl.$^5$: **B 62 D 61/12, B 60 G 11/46**

(54) Achsanhebevorrichtung für luftgefederte Fahrzeugachse.

(30) Priorität: **14.09.83 DE 3333171**

(43) Veröffentlichungstag der Anmeldung:
**24.04.85 Patentblatt 85/17**

(45) Bekanntmachung des Hinweises auf die
Patenterteilung:
**20.06.90 Patentblatt 90/25**

(84) Benannte Vertragsstaaten:
**AT BE CH DE FR GB IT LI NL SE**

(56) Entgegenhaltungen:
**DE-A-1 780 272**
**DE-A-2 930 155**
**DE-U-8 204 358**
**DE-U-8 219 178**
**US-A-3 674 249**

(73) Patentinhaber: **Otto Sauer Achsenfabrik
Keilberg
Hauptstrasse 26
D-8751 Bessenbach-Keilberg (DE)**

(72) Erfinder: **Koschinat, Hubert c/o KEIL &
SCHAAFHAUSEN
Patentanwälte Ammelburgstrasse 34
D-6000 Frankfurt am Main 1 (DE)**

(74) Vertreter: **Keil, Rainer A., Dipl.-Phys. Dr. et al
KEIL & SCHAAFHAUSEN Patentanwälte
Eysseneckstrasse 31
D-6000 Frankfurt am Main 1 (DE)**

Courier Press, Leamington Spa, England.

## Beschreibung

Die Erfindung bezieht sich auf eine Achsanhebevorrichtung für eine luftgefederte Fahrzeugachse, deren Achsführung auf beiden Fahrzeugseiten über Federlenker erfolgt, wobei die Federlenker einerseits mittels einer Achseinspannung an dem Achskörper unter Bildung eines Stabilisators fest eingespannt und andererseits vor dem Achskörper an dem Chassis angelenkt sind, sowie mit einem einzigen Liftarm.

Eine Achsanhebevorrichtung dieser Art ist aus der DE-U-8 204 358 an sich bekannt. Dort ist ein einziger Liftarm in der Fahrzeugmittelebene angeordnet, um einen Gewichtsausgleich zu gewährleisten. Dies erfordert jedoch besondere Versteifungsmaßnahmen des Fahrzeugchassis, was kostenaufwendig ist und einen nachträglichen Anbau erschwert.

Aus der DE-U-1 931 800 ist eine Achsanhebevorrichtung für eine luftgefederte Fahrzeugachse bekannt, bei welcher der Achskörper an zwei Schwingarmen angeordnet ist, deren Drehachse in Fahrtrichtung vor oder hinter der Radachse liegt. Die auf beiden Fahrzeugseiten vorgesehenen Schwingarme haben je einen weiteren Hebel, insbesondere sind sie über den Anlenkpunkt der Schwingen hinaus waagebalkenartig verlängert. Die Hebel bzw. Verlängerungen nehmen an ihrem freien Ende jeweils Liftbälge auf, welche sich ihrerseits gegen den Fahrzeugrahmen abstützen. Diese Achsanhebevorrichtung ist konstruktiv aufwendig und schwer.

Hiervon ausgehend ist Aufgabe der vorliegenden Erfindung, eine Achsanhebevorrichtung einfacheren konstruktiven Aufbaus und zuverlässiger Funktion zu schaffen.

Diese Aufgabe wird mit der Erfindung im wesentlichen dadurch gelöst, daß unter Nutzung der Steifigkeit des aus Achskörper und Federlenkern gebildeten Stabilisators nur ein einziger Liftarm an einer Fahrzeugseite zum Anheben der gesamten Achse vorgesehen ist.

Hiermit wird eine erhebliche Kosteneinsparung dadurch erreicht, daß nur ein einziger Liftarm auf einer Fahrzeugseite, d.h. nur links oder rechts, vorgesehen zu werden braucht. Denn ein gleichmäßiges Anheben der gesamten Achse wird mit dem einzigen Liftarm dadurch sichergestellt, daß die Federlenker einerseits an dem Achskörper fest eingespannt und andererseits am Chassis, z.B. über Halteböcke, angelenkt sind.

Durch diesen U-förmigen unter der Gewichtskraft der Achse allein nur äußerst schwer verwindbaren Verbund von Federlenker links — Achskörper Mitte — Federlenker rechts wird einerseits eine Rückstellkraft bei einseitiger Einfederung bewirkt und ist es andererseits möglich, daß trotz einseiger Anordnung nur eines Liftarmes die Achse auf beiden Seiten gleichmäßig angehoben wird, weil das einseitig wirkende Achsgewicht mit den Rädern nicht in der Lage ist, die Federlenker während des Anhebens nennenswert zu verbiegen.

Neben der konstruktiven Vereinfachung bringt die neue Achsanhebevorrichtung eine Einsparung an Gewicht, die der Nutzlast des Fahrzeuges zugute kommt. Der Liftarm kann beispielsweise einstückig ausgebildet und mit dem Achskörper verbunden sein.

Eine besonders kompakte und funktionsgerechte Achsanhebevorrichtung nach der Erfindung ergibt sich dann, wenn der Liftarm von dem Achskörper aus gesehen etwa in Richtung wie die Federlenker verläuft, über die Anlenkpunkte der Federlenker am Chassis hinausgeführt ist und mit seinem Vorderende mit einer Hubeinrichtung in Verbindung steht.

Die nur einseitige Anordnung des Liftarmes bringt außerdem den wesentlichen Vorteil mit sich, daß die Hubeinrichtung zum Anheben der Achse bei einer besonderen Ausgestaltung des Erfindungsgedankens unmittelbar unter dem Fahrzeuglängsträger befestigt werden kann. Dadurch sind zusätzliche Hilfskonstruktionen für den Fahrzeugbauer entbehrlich.

Ein problemloser, auch nachträglicher Einbau und Austausch wird insbesondere dann gewährleistet, wenn der Liftarm über die Achseinspannung der Federlenker mit dem Achskörper verschraubbar ist.

Ein weiteres Erfindungsmerkmal besteht darin, daß ein Abschnitt des Liftarmes die Spannplatte der Achseinspannung der Federlenker bildet. Hierdurch wird der konstruktive Aufwand insbesondere dann weiter verringert, wenn der Liftarm einteilig ausgebildet ist.

Es ist ferner von besonderem Vorteil, wenn der Liftarm rückwärtig über den Achskörper hinaus verlängert ist und einen Luftfederträger bildet. Insbesondere kann aber der Liftarm einschließlich Spannplatte und Luftfederträger ein einziges Bauteil bilden. Der Liftarm übernimmt dann in Teilbereichen seiner Länge Funktionen, die bisher von anderen erforderlichen Konstruktionsteilen übernommen werden mußten, so daß sich eine besonders wirtschaftliche Konstruktion ergibt.

Vorzugsweise ist die Hubeinrichtung als Liftbalg ausgebildet. Der Liftbalg kann dann aus Rationalisierungsgründen mit den Federbälgen baugleich sein.

Weitere Ziele, Merkmale, Vorteile und Anwendungsmöglichkeiten der vorliegenden Erfindung ergeben sich aus der nachfolgenden Beschreibung eines Ausführungsbeispieles anhand der Zeichnung.

Es zeigt:

Fig. 1 in Seitenansicht schematisch eine die Erfindung aufweisende Achsanhebevorrichtung, und

Fig. 2 in Draufsicht die Achsanhebevorrichtung gemäß Fig. 1.

Die Achsanhebevorrichtung 1 ist für eine mittels Federbälgen 9 luftgefederte Räder 3 aufnehmende Fahrzeugachse bestimmt. Die Achsführung erfolgt über auf beiden Fahrzeugseiten angeordnete Federlenker 7, die achsseitig mittels einer Achseinspannung 2 an dem Achskörper 6 fest eingespannt und chassisseitig vor dem Achskörper 6 gelenkig angebracht sind. Die Achseinspannung 2 weist den Achskörper 6 übergreifende Federbügel 4 und untenliegende Achslappen 5 auf, die unter Einspannung der Federlenker 7 mit einer Spannplatte 12 mittels Gewindebolzen 14 verschraubt ist. Die Spannplatte 12 ist von einem Abschnitt eines im dargestellten Fall gelenkfreien Liftarmes 11 gebildet, welcher mit seinem Vorderende über die Anlenkpunkte P der Federlenker 7 an den Halteböcken 8 hinausragt und auf welches Vorderende eine als krafterzeugendes Glied ausgebildete Hubeinrichtung 10, im dargestellten Fall ein Liftbalg, einwirkt, der beispielsweise baugleich mit den Federbälgen 9 sein kann. Der Liftarm 11 bildet einteilig die Spannplatte 12 und erstreckt sich nach hinten über den Achskörper 6 und seinen die Spannplatte 12 bildenden Abschnitt hinaus. Diese hintere Verlängerung bildet einteilig einen Luftfederträger 13.

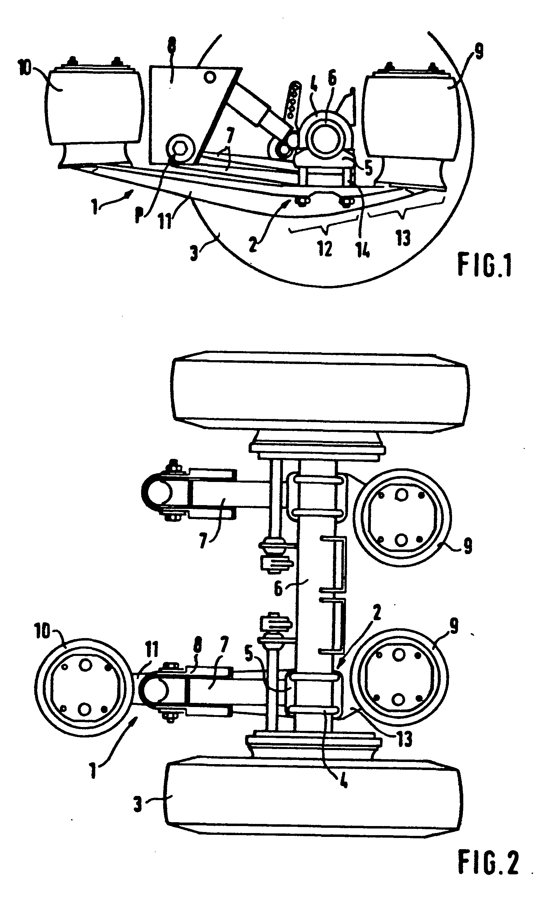

Wie aus der Darstellung von Fig. 2 ersichtlich, ist die Achsanhebevorrichtung 1 nur an einer Fahrzeugseite vorgesehen. Denn die Federlenker 7 auf der linken und rechten Fahrzeugseite und der Achskörper 6 bilden einen verwindungssteifen U-förmigen Verbund, der bei hinreichender Federrate der Federlenker 7 für ein gleichmäßiges Anheben der gesamten Achse auf beiden Seiten sorgt, auch wenn erfindungsgemäß der Liftarm 11 nur auf einer Fahrzeugseite vorgesehen ist. Die als Ausführungsbeispiel dargestellte Achsanhebevorrichtung 1 läßt sich einfach auch noch nachträglich montieren. Der Liftarm 11 ersetzt dabei in Gestalt eines einzigen Teils die sonst gesondert erforderliche Spannplatte 12 und den Luftfederträger 13.

## Patentansprüche

1. Achsanhebevorrichtung für eine luftgefederte Fahrzeugachse (6), deren Achsführung auf beiden Fahrzeugseiten über Federlenker (7) erfolgt, wobei die Federlenker (7) einerseits mittels einer Achseinspannung (2) an dem Achskörper (6) unter Bildung eines Stabilisators fest eingespannt und andererseits vor dem Achskörper (6) an dem Chassis angelenkt sind, sowie mit einem einzigen Liftarm (11), dadurch gekennzeichnet, daß unter Nutzung der Steifigkeit des aus Achskörper (6) und Federlenkern (7) gebildeten Stabilisators nur ein einziger Liftarm (11) an einer Fahrzeugseite zum Anheben der gesamten Achse vorgesehen ist.

2. Achsanhebevorrichtung nach Anspruch 1, dadurch gekennzeichnet, daß der Liftarm (11) von dem Achskörper (6) aus gesehen etwa in der gleichen Richtung wie die Federlenker (7) verläuft, über die Anlenkpunkte (P) der Federlenker (7) am Chassis hinausgeführt ist und mit seinem Vorderende mit einer Hubeinrichtung (10) in Verbindung steht.

3. Achsanhebevorrichtung nach Anspruch 1 oder 2, dadurch gekennzeichnet, daß die Hubeinrichtung (10) unmittelbar unter dem Fahrzeuglängsträger angreift.

4. Achsanhebevorrichtung nach einem der Ansprüche 1 bis 3, dadurch gekennzeichnet, daß der Liftarm (11) über die Achseinspannung (2) der Federlenker (7) mit dem Achskörper (6) verschraubt ist.

5. Achsanhebevorrichtung nach Anspruch 4, dadurch gekennzeichnet, daß ein Abschnitt des Liftarmes (11) eine Spannplatte (12) der Achseinspannung (2) der Federlenker (7) bildet.

6. Achsanhebevorrichtung nach einem der Ansprüche 1 bis 5, dadurch gekennzeichnet, daß der Liftarm (11) rückwärtig über den Achskörper (6) hinaus verlängert ist und einen Luftfederträger (13) bildet.

7. Achsanhebevorrichtung nach einem der Ansprüche 1 bis 6, dadurch gekennzeichnet, daß die Hubeinrichtung (10) als Liftbalg ausgebildet ist.

## Revendications

1. Dispositif de levage pour un essieu de véhicule (6) à suspension pneumatique, essieu dont le guidage s'effectue sur les deux côtés du véhicule par des bras oscillants (7), les brasoscillants (7) étant d'une part fixés rigidement au corps d'essieu (6), au moyen d'un dispositif d'enserrage d'essieu (2), en formant un stabilisateur, et étant d'autre part articulés sur le châssis en avant du corps d'essieu (6), un unique bras élévateur (11) étant prévu, caractérisé par le fait qu'en utilisant la rigidité du stabilisateur formé par le corps d'essieu (6) et les bras oscillants (7), un unique bras élévateur (11) est prévu sur un côté du véhicule pour le levage de l'ensemble de l'essieu.

2. Dispositif de levage d'essieu suivant la revendication 1, caractérisé par le fait que le bras élévateur (6) est orienté, vu depuis le corps d'essieu (6), à peu près dans la même direction que les bras oscillants (7), s'étend au-delà des axes d'articulation (P) des bras oscillants (7) sur le châssis et se trouve en liaison avec un dispositif de levage (10) à son extrémité avant.

3. Dispositif de levage d'essieu suivant la revendication 1 ou 2, caractérisé par le fait que le dispositif de levage (10) prend appui directement en dessous du longeron du véhicule.

4. Dispositif de levage d'essieu suivant l'une des revendications 1 à 3, caractérisé par le fait que le bras élévateur (11) est fixé par vissage au corps d'essieu (6) en passant par le dispositif d'enserrage d'essieu (2) des bras oscillants (7).

5. Dispositif de levage d'essieu suivant la revendication 4, caractérisé par le fait qu'une section du bras élévateur (11) constitue une plaque de serrage (12) du dispositif d'enserrage d'essieu (2) des bras oscillants (7).

6. Dispositif de levage d'essieu suivant l'une des revendications 1 à 5, caractérisé par le fait que le bras élévateur (11) est prolongé vers l'arrière au-delà du corps d'essieu (6) et constitue un support de ressort pneumatique (13).

7. Dispositif de levage d'essieu suivant l'une des revendications 1 à 6, caractérisé par le fait que le dispositif de levage (10) est réalisé sous forme de soufflet élévateur.

## Claims

1. An axle hoisting device for an air-sprung vehicle axle (6), the axle guidance of which occurs on both vehicle sides by way of spring control levers (7), wherein the spring control levers (7) are, on the one hand, firmly clamped by means of an axle clamp (2) on the axle body (6) with formation of a stabilizer and, on the other hand, are pivoted in front of the axle body (6) on the chassis, as well as with a single lifting arm (11), characterised in that when using the stiffness of the stabilizer formed from axle bodies (6) and spring control levers (7) only one single lifting arm (11) is provided on one vehicle side for lifting the whole axle.

2. An axle hoisting device according to claim 1, characterised in that the lifting arm (11) when seen from the axle body (6) extends approximately in the same direction as the spring control lever (7), is led out via the pivoting points (P) of the spring control lever (7) on the chassis and is connected with its front end to a lifting device (10).

3. An axle hoisting device according to claim 1 or 2, characterised in that the lifting device (10) engages directly under the vehicle longitudinal girder bar.

4. An axle hoisting device according to one of claims 1 to 3, characterised in that the lifting arm (11) is screwed by way of the axle clamp (2) of the spring control levers (7) to the axle body (6).

5. An axle hoisting device according to claim 4, characterised in that a section of the lifting arm (11) forms a clamping plate (12) of the axle clamp (2) of the spring control levers (7).

6. An axle hoisting device according to one of claims 1 to 5, characterised in that the lifting arm (11) is lengthened rearward over the axle body (6) and forms a pneumatic spring carrier (13).

7. An axle hoisting device according to one of claims 1 to 6, characterised in that the lifting device (10) is constructed as a lifting bellows.

FIG.1

FIG.2